# DEMANDE DE BREVET EUROPEEN

(11) **EP 1 189 446 A1**
(43) Date de publication de la demande: **20.03.2002**
(21) Numéro de dépôt: 01402360.0
(22) Date de dépôt: 13.09.2001
(51) Int. Cl.: H04N 7/24, G06F 17/30

(54) **Procédé de synchronisation d'un fichier multimédia**

(30) Priorité: 14.09.2000 FR 0011713
(71) Demandeur: ALCATEL, 75008 Paris (FR)
(72) Inventeur: Comps, Christophe, 33610 Cestas (FR); Boudet, Daniel, 75015 Paris (FR); Sarremejean, Xavier, 95490 Vaureal (FR)
(74) Mandataire: El Manouni, Josiane

(57) **Abrégé**

L'invention a pour objet un procédé de synchronisation de données dans un document multimédia (50), ledit document comprenant au moins deux fichiers informatiques distincts (piste1,piste2) appelés premier fichier, deuxième fichier, ..., procédé dans lequel :
- on mémorise dans le premier fichier, dans le deuxième fichier,..., respectivement des données d'un premier type, d'un deuxième type,..., lesdites données étant regroupées sous forme d'au moins une commande événementielle, caractérisant un événement, ledit événement étant du type important ou non important,
- on insère dans chaque fichier au moins une commande de synchronisation,
caractérisé en ce que ladite commande de synchronisation est insérée avant chaque commande événementielle caractérisant un événement important.

## Description

La présente invention concerne un procédé de synchronisation des différents types de données dans un fichier multimédia. Elle s'applique par exemple aux systèmes embarqués tels des terminaux de radiocommunication, des ordinateurs de poche ou tout autre appareil pouvant posséder des capacités multimédias et pour lequel la taille des fichiers multimédias et la puissance de calcul nécessaire à leur traitement constitue un problème.

Il existe de très nombreux fichiers monomédia, c'est à dire ne concernant qu'un type particulier de données, comme les formats JPEG (Joint Photographic Expert Group, en anglais) pour la mémorisation d'images, ou RTF (Rich Tagged File, en anglais) pour la mémorisation de textes.

Le terme de fichier multimédia se réfère généralement à l'intégration de données de différents types (tels que des images, du son, du texte) dans un même fichier. Chaque type de données est contenu dans une piste donnée. Chaque piste est organisée sous forme d'une série de commandes. Chaque piste est parcourue par un microprocesseur. Chaque microprocesseur exécute, en même temps que les autres, les commandes d'une ou plusieurs pistes simultanément et peut présenter les données, à travers différentes interfaces, à un utilisateur d'un appareil à capacités multimédias. Les interfaces peuvent être un écran pour les données de type texte et images et un haut-parleur pour les données de type audio. L'utilisateur voit donc défiler un texte et des images pendant qu'il entend des sons.

Le problème est donc de faire correspondre le texte avec la musique et les images, soit de synchroniser les données de types différents contenue dans un même fichier multimédia.

Or, chaque microprocesseur, associé à chaque piste contenant chacune un type de données, est basé sur un oscillateur. Chaque oscillateur émet un signal avec une fréquence légèrement différente d'un autre oscillateur. De plus, les logiciels exécutés par chacun des processeurs peuvent être basés sur des systèmes d'exploitation différents présentant des dérivations temporelles dissemblables. Ainsi, au fur et à mesure, deux microprocesseurs ayant commencé à lire chacun leur piste au même instant ne seront plus synchronisés l'un par rapport à l'autre. Par exemple, le texte d'une phrase sera affiché avant que ne soit audible la phrase chantée, dans le cas où le microprocesseur lié à la piste des données de sons est en retard par rapport au microprocesseur lié à la piste des données de texte.

La solution de l'état de l'art est la synchronisation temporelle.

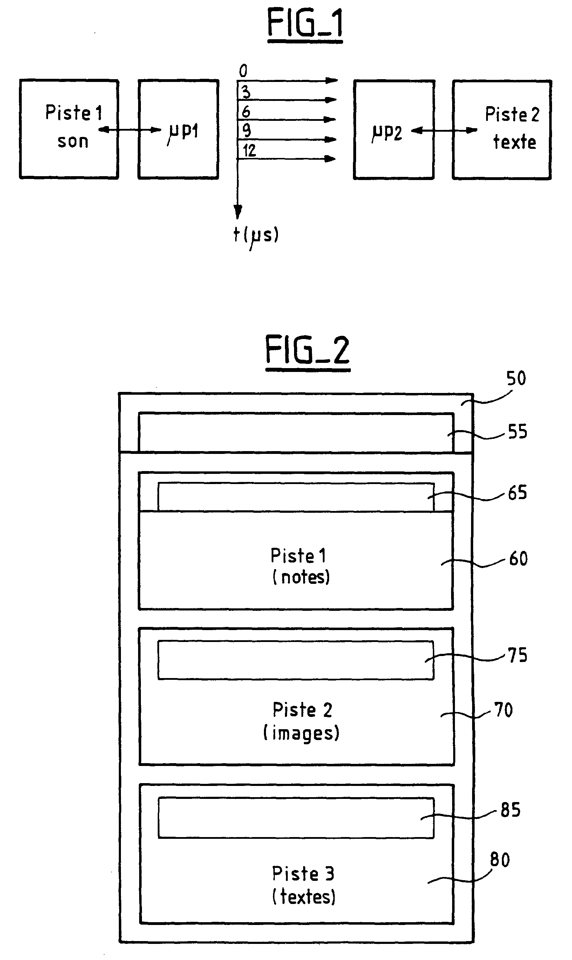

Dans l'exemple de la figure 1, le microprocesseur µp₁, qui lit la piste 1 comprenant du son, envoie une information de synchronisation toutes les 3 µs au microprocesseur µp₂, qui lit la piste 2 comprenant du texte. Ces informations de synchronisation peuvent être stockées ou non dans le fichier multimédia.

Ainsi, le microprocesseur µp₂ vérifie toutes les 3µs si sa base de temps est synchrone avec celle du premier microprocesseur µp₁. Si le microprocesseur µp₂ s'aperçoit qu'il est en avance par rapport à l'autre, alors il calcule la différence de temps, et arrête de lire la piste 2 pendant ce laps de temps. Puis il repart de nouveau synchrone avec le microprocesseur µp₁. Il apparaît que plus l'on désire une bonne synchronisation, plus il faut diminuer le laps de temps entre chaque information de synchronisation et plus le nombre d'informations échangées augmente.

Or, dans les terminaux mobiles, il existe des contraintes sévères en ce qui concerne la taille des fichiers. En effet, la mémoire disponible est limitée pour des raisons d'encombrement et d'autonomie. De plus, les fichiers multimédias doivent pouvoir être téléchargés depuis un centre serveur en un temps raisonnable et ce temps est directement dépendant de la taille du fichier.

Stocker des informations de synchronisation temporellement récurrentes est pénalisant en terme de mémoire : le flux de données échangées est alourdi par de nombreux échanges d'informations à des fins de synchronisation et ceci provoque une surcharge de la mémoire.

Cette solution présente aussi un autre inconvénient majeur : l'information de synchronisation peut arriver au microprocesseur µp₂ juste au milieu de l'affichage d'une des phrases. Ainsi, l'affichage de cette phrase est stoppé net et l'utilisateur n'a pas une impression de fluidité de présentation des données.

Le but de la présente invention est de réduire la taille des fichiers multimédias, optimiser le nombre d'informations échangées, tout en permettant une synchronisation optimale.

A cette fin, l'invention a pour objet un procédé de synchronisation de données dans un document multimédia (50), ledit document comprenant au moins deux fichiers informatiques distincts (piste1,piste2) appelés premier fichier, deuxième fichier, ..., procédé dans lequel :
- on mémorise dans le premier fichier, dans le deuxième fichier,..., respectivement des données d'un premier type, d'un deuxième type,..., lesdites données étant regroupées sous forme d'au moins une commande événementielle, caractérisant un événement, ledit événement étant du type important ou non important,
- on insère dans chaque fichier au moins une commande de synchronisation,
caractérisé en ce que ladite commande de synchronisation est insérée avant chaque commande événementielle caractérisant un événement important.
Avantageusement, ce procédé est caractérisé en ce que l'événement important correspond à une commande d'affichage d'un texte, une commande d'affichage d'une image, ou une commande d'audition d'un son.

L'invention a également pour objet un dispositif de synchronisation de données, dans un fichier multimédia contenant au moins une piste dans laquelle ou dans lesquelles sont mémorisées les dites données et au moins une commande de synchronisation étant incluse dans chaque piste, ayant des premiers moyens pour lire les données de chaque piste, et des deuxièmes moyens pour faire communiquer les premiers moyens entre eux, les informations communiquées entre lesdits premiers moyens concernant l'occurrence d'une commande de synchronisation. Ce dispositif est caractérisé en ce qu'un premier moyen pour lire les données étant désigné comme prioritaire, celui-ci impose aux autres premiers moyens de se synchroniser avec lui.

L'invention et ses avantages apparaîtront de façon plus claire dans la description qui suit, en liaison avec les figures jointes.

La figure 1, déjà décrite, représente la synchronisation d'un fichier multimédia dans l'état de l'art.

La figure 2 schématise un fichier multimédia conforme à l'invention.

La figure 3 représente une vue détaillée des pistes contenues dans un fichier multimédia.

Les données d'un fichier multimédia selon l'invention peuvent être des valeurs temporelles ou des valeurs de codage de son, de texte ou d'image. Les valeurs temporelles peuvent représenter une durée de note, une durée d'affichage d'une image, une valeur de début ou de fin de piste ou encore une durée d'attente entre deux évènements. Selon l'invention, les pistes du fichier multimédia comprennent également des commandes de synchronisation liées aux divers événements inclus dans la piste (note, image, texte..).

La figure 2 schématise la structure d'un fichier multimédia suivant l'invention.

Ce fichier multimédia 50 comporte une entête 55 et plusieurs pistes 60, 70 et 80. Selon l'invention, un fichier multimédia peut comporter une nombre de piste de 1 à n et la figure 2 n'est qu'un exemple de représentation d'un tel fichier.

L'entête 55 comporte des informations communes à l'ensemble des pistes que nous ne détaillerons pas ici.

Chacune des pistes du fichier 50 peut contenir un unique type de données. Par exemple, la piste 60 peut correspondre à une son de format piste MIDI (Musical Instrument Digital Interface, en anglais), la piste 70 peut comporter une séquence d'images et la piste 80 peut comporter des séquences de textes. Ces différentes pistes peuvent être destinées à être parcourues par des microprocesseurs et présentées simultanément à un utilisateur. Les pistes sont donc parcourues par les différents microprocesseurs en même temps.

Chaque piste 60, 70 et 80 comporte un entête respectivement, 65, 75 et 85. Dans chaque entête, se trouve un indicateur du type de données contenues dans la piste. Ainsi, le microprocesseur ayant la capacité de lire des données de type MIDI sait grâce à cet indicateur quelle piste il doit lire.

Chaque piste comprend également des données organisées sous forme de commandes (par exemple, affichage d'une image ou d'un texte) qui sont exécutées séquentiellement par le microprocesseur.

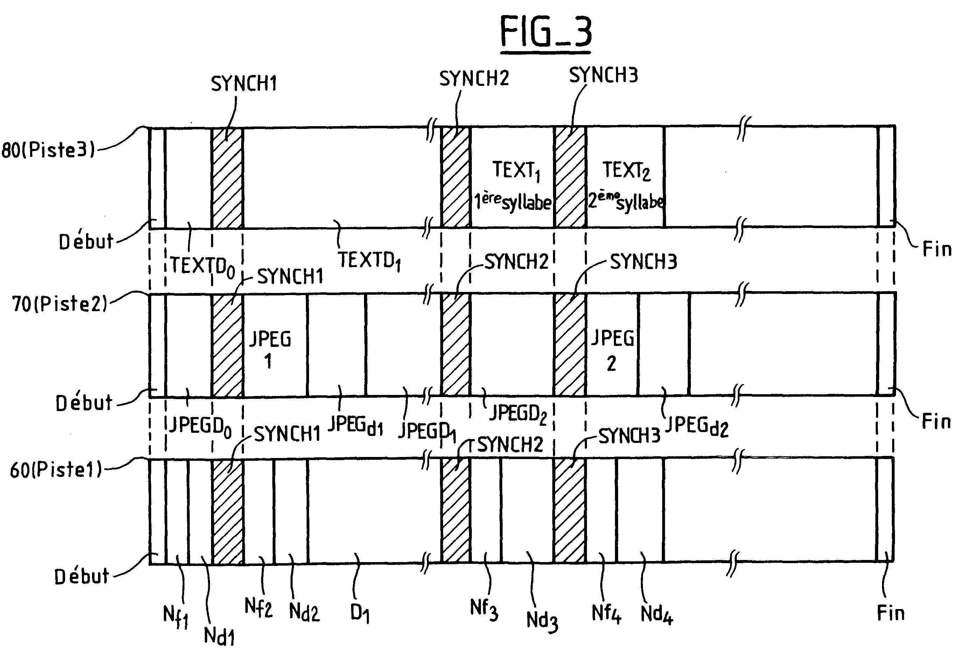

La figure 3 détaille une structure possible de trois pistes contenues dans un fichier multimédia.

Dans cet exemple :
- La piste 60 ou piste 1 ne contient que des données sonores de type MIDI. Ces données sonores pourraient également être des sons échantillonnés (paroles, bruits divers comme des applaudissements ou des bruits de micro..).
- La piste 70 ou piste 2 ne comprend que des données correspondant à des séquences d'images JPEG. Ces données pourraient également être de type vidéo.
- La piste 80 ou piste 3 ne contient que des données correspondant à des messages de texte.
Chaque piste comporte un champ de début et un champ de fin de la présentation à l'utilisateur (respectivement appelée Début et Fin sur la figure 3).

La piste 1 comprend des données relatives au son. Un premier champ Nf₁ représente la fréquence d'une première note, et un deuxième champ Nd₁ représente sa durée. De même, les champs Nh₂ et Nd₂ définissent une deuxième note. Le champ D₁ représente un délai, c'est à dire une période d'attente avant de présenter les notes suivantes de la piste.

Les champs Nh₃ et Nd₃ représentent respectivement la fréquence et la durée d'une troisième note.

Les champs de définition d'une note ou d'un délai peuvent ainsi se suivre, au sein de la piste 1.

La piste 2 contient des données correspondant à des séquences d'images JPEG. Dans cet exemple, deux images JPEG, représentées par les champs JPEG1 et JPEG2, doivent être représentées à l'utilisateur. Les images sont présentées pendant une durée donnée et représentée par les champs JPEGd₁ pour l'image JPEG1 et JPEGd₂ pour l'image JPEG2. Les champs JPEGD₀, JPEGD₁ et JPEGD₂ représentent des délais d'attente avant ou entre deux images.

La piste 3 contient des données correspondant à des messages de texte. Dans cet exemple, deux syllabes, représentées par les champs TETX1 et TEXT2, doivent être présentées à l'utilisateur. Les champs TEXTD₀ et TEXTD₁ représentent des délais d'attente avant un texte.

Les commandes de synchronisation, sont représentées par des champs SYNCHi avec i compris entre 1 et n.

Ces commandes de synchronisation ne sont pas temporelles comme dans l'état de l'art, mais elles dépendent d'un événement précis. Les champs SYNCHi ne sont donc pas présents dans les pistes à des intervalles de temps régulier.

Dans l'exemple de la figure 3, les notes de musique (comprises dans les données de la piste 1) ne doivent pas être interrompues. La synchronisation des trois pistes ne doit pas impliquer une interruption de la musique entendue par l'utilisateur. Le microprocesseur dédié à lire cette piste est considéré comme étant le maître.

Il impose aux autres microprocesseurs, dits esclaves, en charge des autres pistes de se synchroniser avec lui.

Certaines notes doivent correspondent à l'affichage d'une image ou d'une syllabe.

Dans notre exemple, les premiers champs Nf₁ et Nd₁ correspondent à une première note. La deuxième note, correspondant aux deuxièmes champs Nf₂ et Nd₂, doit être entendue au moment où s'affiche la première image, correspondant au champ JPEG1 de la piste 2. Puis, après un délai correspondant au champ D₁, la troisième note, correspondant aux troisièmes champs Nf₃ et Nd₃, doit être entendue au moment où s'affiche la première syllabe, correspondant au champ TEXT1 de la piste 1. Enfin, la quatrième note, correspondant aux quatrièmes champs Nf₄ et Nd₄, doit être entendue au moment où s'affiche à la fois la deuxième image, correspondant au champ JPEG1de la piste 2, et la deuxième syllabe, correspondant au champ TEXT2 de la piste 1.

Ainsi, la première commande de synchronisation, correspondant au champ SYNCH1, se trouve:
- entre les champs Nd₁ et Nf₂ dans la piste 1,
- entre les champs JPEGD₀ et JPEG1 dans la piste 2,
- entre les champs TEXTD₀ et TEXTD₁ dans la piste 3.

La deuxième commande de synchronisation, correspondant au champ SYNCH2, se trouve :
- entre les champs D₂ et Nf₃ dans la piste 1,
- entre les champs JPEGD₁ et JPEGD₂ dans la piste 2,
- entre les champs TEXTD₁ et TEXT1 dans la piste 3.

La troisième commande de synchronisation, correspondant au champ SYNCH3, se trouve :
- entre les champs Nd₃ et Nf₄ dans la piste 1,
- entre les champs JPEGD₂ et JPEG2 dans la piste 2,
- entre les champs TEXT1 et TEXT2 dans la piste 3.

Lors de la présentation du document multimédia à l'utilisateur, toutes les pistes sont parcourues en même temps par les microprocesseurs. Deux cas se présentent suivant que les microprocesseurs esclaves sont en retard ou en avance par rapport au microprocesseur maître. Chaque microprocesseur esclave peut recevoir de la part du maître des informations concernant les commandes de synchronisation.

Le microprocesseur maître dédié à la piste 1 arrive à la première commande synchronisation, correspondant au champ SYNCH1, et il envoie aux autres microprocesseurs une première information de synchronisation.

Deux cas se présentent :
- Si, au moment où il reçoit cette information, le microprocesseur esclave dédié à la piste i, en retard, n'a pas encore rencontré le champ SYNCH1 dans sa piste i, alors il continue à parcourir son fichier sans exécuter les commandes rencontrées afin d'atteindre le plus rapidement possible le champ SYNCH1. Puis, il va reprendre l'exécution des commandes rencontrées à la suite du champ SYNCH1.
- Si, avant de recevoir cette information, le microprocesseur esclave dédié à la piste i avait déjà atteint le champ SYNCH1, alors il va arrêter la lecture des champs de la piste i jusqu'à ce qu'il reçoive la première information de synchronisation envoyée par le microprocesseur maître. Puis, il reprend la lecture des champs de la piste i et exécute les commandes décrites.

Donc chaque commande importante, c'est à dire ne souffrant pas d'avoir une exécution interrompue, sera représentée par un champ donné qui sera précédé d'un champ représentant une commande de synchronisation. Cette commande de synchronisation se trouvera à la même place dans toutes les autres pistes. De ce fait, les différentes pistes se synchroniseront à nouveau, si besoin, avant toute commande importante.

Ainsi, cette invention permet de synchroniser des données d'un fichier multimédia entre elles sans surcharger la mémoire d'informations de synchronisation inutiles en limitant les transferts d'information de synchronisation entre les microprocesseurs, sans surcharger les pistes de données de synchronisation nombreuses et inutiles et surtout sans que se produise un arrêt au milieu de l'exécution d'une commande importante.

## Revendications

1. Procédé de synchronisation de données dans un document multimédia (50), ledit document comprenant au moins deux fichiers informatiques distincts (piste1,piste2) appelés premier fichier, deuxième fichier, ..., procédé dans lequel :
- on mémorise dans le premier fichier, dans le deuxième fichier,..., respectivement des données d'un premier type, d'un deuxième type,..., lesdites données étant regroupées sous forme d'au moins une commande événementielle, caractérisant un événement, ledit événement étant du type important ou non important,
- on insère dans chaque fichier au moins une commande de synchronisation,
**caractérisé en ce que** ladite commande de synchronisation est insérée avant chaque commande événementielle caractérisant un événement important.

2. Procédé selon la revendication 1, **caractérisé en ce que** l'événement important correspond à une commande d'affichage d'un texte, une commande d'affichage d'une image, ou une commande d'audition d'un son.

3. Procédé selon l'une quelconque des revendications précédentes, **caractérisé en ce que** ladite commande de synchronisation incluse dans un premier fichier (60) est répétée à l'identique dans le ou les autres fichiers (70, 80) du document multimédia de manière que l'exécution de la commande de synchronisation située au début du premier fichier soit concomitante avec l'exécution de la première commande de synchronisation située au début du ou des autres fichiers (70, 80).

4. Procédé selon l'une quelconque des revendications précédentes, **caractérisé en ce que** chaque commande de synchronisation est identifiée de manière unique.

5. Procédé selon l'une quelconque des revendications précédentes, **caractérisé en ce que** chaque commande de synchronisation devant être exécutée simultanément porte un numéro identique d'un fichier à l'autre.

6. Procédé, selon les revendications 3 à 5, dans lequel :
- on désigne l'un des fichiers comme étant prioritaire par rapport à l'autre ou aux autres,
- on lit simultanément tous les fichiers du document, et on exécute les commandes successives incluses dans chacun des fichiers.
Pendant cette étape, dès la lecture d'une commande de synchronisation dans l'un des fichiers :
- si la commande de synchronisation est trouvée dans le fichier prioritaire, on continue à lire le(s) fichier(s) non prioritaire(s) sans exécuter les commandes événementielles lues jusqu'à ce que cette commande de synchronisation soit trouvée dans ledit (lesdits) fichier(s) non prioritaire(s) et on reprend l'exécution des commandes événementielles situées après cette commande de synchronisation dans le fichier non prioritaire,
- si la commande de synchronisation est trouvée dans le (un des) fichier(s) non prioritaire(s) :
- on arrête la lecture dudit (desdits) fichier(s) non prioritaire(s),
- on continue la lecture et l'exécution des commandes événementielles situées dans le fichier prioritaire jusqu'à ce qu'on trouve cette commande de synchronisation,
- on lit et on exécute à nouveau les commandes du (des) fichier(s) non prioritaire(s) et on continue la lecture et l'exécution des commandes situées dans le fichier prioritaire.

7. Dispositif, pour la mise en oeuvre du procédé selon les revendications 1 à 6, pour l'exploitation d'un document multimédia 50, contenant au moins deux fichiers distincts (piste1, piste2), ayant des moyens de lecture des données de chaque fichier, et des moyens de communication pour la communication des moyens de lecture entre eux, les informations communiquées entre lesdits moyens de lecture concernant la lecture d'une commande de synchronisation dans un fichier, **caractérisé en ce qu'**un moyen de lecture d'un fichier est désigné comme prioritaire par rapport aux autres moyens de lecture.
